# EUROPÄISCHE PATENTSCHRIFT

(11) **EP 0 571 706 B1**
(45) Veröffentlichungstag und Bekanntmachung des Hinweises auf die Patenterteilung: **05.07.1995**
(21) Anmeldenummer: 93101384.1
(22) Anmeldetag: 29.01.1993
(51) Int. Cl.: F16K 5/06

(54) **Kugelhahn**
Ball valve
Vanne sphérique

(30) Priorität: 25.05.1992 DE 4217112
(43) Veröffentlichungstag der Anmeldung: 01.12.1993
(73) Patentinhaber: Johannes Erhard, H. Waldenmaier Erben Süddeutsche Armaturenfabrik GmbH & Co., D-89522 Heidenheim (DE)
(72) Erfinder: Förster, Siegmar, W-7920 Heidenheim (DE)
(74) Vertreter: Seeger, Wolfgang, Dipl.-Phys.

(56) Entgegenhaltungen:
- US-A- 3 920 036
- US-A- 4 009 753
- US-A- 4 976 403

## Beschreibung

Die Erfindung betrifft einen Kugelhahn, insbesondere für Wasserversorgungs-Druckleitungen, mit einer Kugel mit Durchgangsbohrung als Absperrkörper.

Bekannt sind Kugelhähne (siehe z.B. US-A-3 920 036), die eine schwimmende Vollkugel besitzen und mit Hebel bedient werden. Durch die 90°-Bewegung treten sehr kurze Schließ- und Öffnungszeiten auf, die in Druckwasserleitungen zu hohen Druckstößen führen und deshalb für diesen Einsatz nicht akzeptiert sind. Weiterhin sind Kugelhähne bekannt (siehe z.B. US-A-4 976 403), die eine in Wellenzapfen geführte Kugel besitzen. Diese Kugelhähne sind mit Getrieben, wie Schneckenradgetrieben ausgerüstet, die seitlich am Kugelhahn angeordnet sind. Diese Kugelhähne sind sehr teuer.

Die derzeit üblichen Armaturenbauarten in Druckwasserleitungen sind im Größenbereich DN 40 - 300 weichdichtende Schieber und im Größenbereich DN 250 - 1200 Absperrklappen. Obwohl Absperrklappen bereits ab DN 80 hergestellt werden, werden sie von den Wasserversorgungsunternehmen aus Kostengründen nicht angenommen. Sie sind auch in dem kleineren Nennweitenbereich nicht akzeptiert, da durch die im Durchgang stehenden Klappenscheibe eine Molchreinigung nicht möglich ist und auch ein höherer Druckverlust vorliegt.

Absperrschieber sind durch den quer zur Durchsflußrichtung bewegten Absperrkörper für höhere Druckdifferenzen ungeeignet, da der Absperrkörper kippt und somit sehr hohe Bedienkräfte aufzuwenden sind, um einen dichten Abschluß zu erzielen. Die Absperrschieber sind nur für die Aufgaben AUF-ZU- geeignet. Regel- oder Drosselaufgaben, wie z.B. beim Füllen, Entleeren und Spülen erforderlich, führen zu Verschleiß der Dichtpartien und zum frühzeitigen Ausfall der Armatur wegen Undichtheit. Der Abschluß der Schieber wird erreicht, indem im Schließzustand der Absperrkörper durch die Spindel verspannt ist. Dadurch stehen sehr hohe Kräfte auf den Gehäuseteilen und den Verbindungsschrauben. Das gummielastische Dichtprofil des Absperrkörpers steht in Schließstellung dauernd unter Pressung und kann durch die im Erdeinbau üblichen unkontrollierten Bedienkräfte überlastet werden, d.h. altern und depolimerisieren.

Aufgabe der vorliegenden Erfindung ist es, eine Armatur zu schaffen, die die Nachteile der bekannten Armaturen vermeidet, kostengünstig herstellbar ist und zuverlässig arbeitet.

Diese Aufgabe ist gemäß der Erfindung dadurch gelöst, daß der Absperrkörper beidseitig parallel zur Achse der Durchgangsbohrung in Form einer Kugelzone abgeflacht und über diese Abflachungen im Gehäuse gegen seitliches Verdrehen geführt ist, und daß der Absperrkörper in Achse des Gehäuses schwimmend zwischen einerseits einem keilförmigen Führungsring und andererseits einem armierten Dichtring gelagert ist und ein Bedienhebel in einem Ausschnitt der führungsringseitigen Kugelkalotte gelenkartig befestigt ist.

Mit der Erfindung wird eine große Anzahl von Vorteilen erzielt. Zunächst ist grundsätzlich festzustellen, daß der erfindungsgemäße Kugelhahn speziell für den Erdeinbau konzipiert ist.
- Die Armaturenbauart Kugelhahn ist für Absperr-, Regel- und Drosselaufgaben geeignet. Als Rohrnetz-Kugelhahn kann er somit nicht nur für AUF-ZU-Betrieb eingesetzt werden, sondern erfüllt die beim Füllen, Entleeren und Spülen einer Rohrleitung auftretenden Aufgaben voll und ganz.
- Zum Bewegen des Absperrkörpers sind geringe Bedienkräft erforderlich.
- Die Kugelbohrung in Größe der Kugelhahn-Nennweite gewährleistet geringsten Druckverlust und gestattet Molchreinigung der Rohrleitung.
- Die Bedienspindel sitzt senkrecht über der Armaturenmitte und erlaubt somit den vom Schieber her gewohnten Einbau der Einbaugarnitur.
- Der erfindungsgemäße Kugelhahn kann mit Flanschen, Muffen und allen anderen üblichen Rohranschlußarten ausgerüstet werden.
- Das relativ flache Gehäuse des Rohrnetz-Kugelhahns ist für Auskleidungen, wie Emaillierung und EKB-Beschichtung (Epoxid-Kunststoff-Beschichtung) hervorragend geeignet.

Nach einer Weiterbildung der Erfindung ist der Führungsring an einer keilförmig angeschrägten Fläche des Gehäuses gelagert und durch diese keilförmig angeschrägten Fläche wird beim gemeinsamen Einbringen von Sitzring, Absperrkörper und Führungsring in das Gehäuse eine zum dichten Abschluß erforderliche Dichtpressung auf den elastischen Sitzring aufgebracht, weiter ist der Führungsring und Sitzring in dieser Lage z.B. durch Haltenocken einer Haube fixiert und damit ist auch die Lage des Absperrkörpers bestimmt.

Diese Weiterbildung der Erfindung ermöglicht in besonders einfacher Weise die Einstellung jeder beliebigen gewünschten Vorspannung des Absperrkörpers gegen den Dichtring.

Nach einer anderen Weiterbildung der Erfindung kann der Absperrkörper durch den Bedienhebel eine Schwenkbewegung von 90° ausführen, wenn das Gegenlager des Bedienhebels z.B. durch eine Spindelmutter auf einer Gewindespindel senkrecht bewegt wird.

Durch den Spindelantrieb werden Umdrehungen pro Hub erreicht, die der Betreiber vom Schieber gewohnt ist. Zweckmäßigerweise ist die gelenkartige Lagerung in der Kugelkalotte in Offenstellung des Absperrkörpers um mehr als 10° gegenüber der senkrechten Achse des Gehäuses (4) ausgelenkt. Durch diese Ausführungsform der Erfindung wird ein toter Winkel verhindert.

Vorteilhafterweise läuft die Spindelmutter auf der Gewindespindel in ihrer oberen und unteren Endlage gegen Festanschläge an. Dadurch wird der Vorteil erzielt, daß die über die Spindel eingeleiteten Bedienkräfte in den beiden Endstellungen AUF und ZU innerhalb der Spindel durch Festanschläge abgefangen und nicht auf Absperrkörper, Gehäuse und Dichtelemente übertragen werden. Damit ist eine Überlastung dieser Bauteile konstruktiv ausgeschlossen.

Die Spindelmutter und der Bolzen des Gegenlagers können in einer dreiseitigen Führungsnut in der Haube gegen Auslenken geführt werden.

Ein Ausführungsbeispiel der Erfindung ist in der Zeichnung dargestellt und wird im folgenden näher beschrieben.

Es zeigen
- Fig. 1: einen erfindungsgemäßen Rohrnetz-Kugelhahn in Geschlossen-Stellung,
- Fig. 2: den Kugelhahn im Schnitt längs A - B durch das Gehäuse der Figur 3,
- Fig. 3: den Rohrnetz-Kugelhahn in Offen-Stellung,
- Fig. 4: den Absperrkörper in Seitenansicht, Rückansicht und Draufsicht.

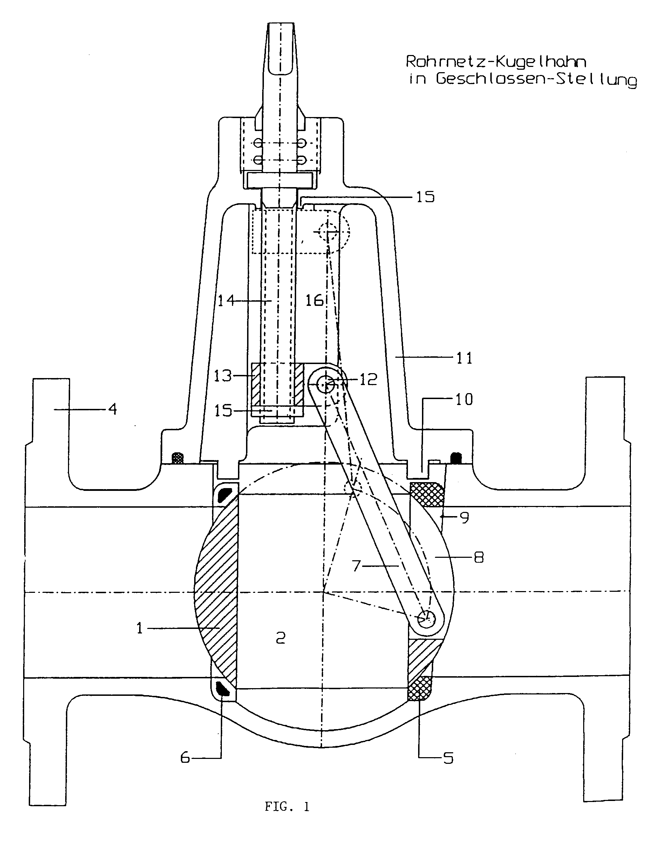

Wie man in Figur 1 sieht, ist der Absperrkörper 1 zwischen einem Dichtring 6 an seiner linken Seite und einem Führungsring 5 an seiner rechten Seite angeordnet. Der Führungsring 5 ist keilförmig ausgebildet und liegt mit seiner geneigten rechten Seite an der schrägen Fläche 9 des Gehäuses an. Auf den keilförmigen Führungsring 5 drückt von oben ein Haltenocken 10 der Ventilhaube 11. Durch diesen Druck wird der Führungsring nach unten und, da er in seiner Bewegung nach rechts durch die schräge Fläche 9 des Gehäuses begrenzt ist, nach links gegen die Absperrkkugel 1 gedrückt. Dadurch wird die Kugel in gewünschter Weise gegen den Sitz- oder Dichting 6 gedrückt, so daß eine sichere Abdichtung der Armatur ermöglicht ist.

Ein Bedienhebel 7 ist teilweise in einem Ausschnitt der Absperrkugel angeordnet und mit seinem unteren Ende an der Absperrkugel angelenkt, während er mit seinem oberen Ende an einem Gegenlager der Spindelmutter 13 angelenkt ist. Diese Spindelmutter 13 ist auf einer Spindel 14 geführt und läuft bei ihrer Bewegung nach oben gegen einen Festanschlag 15 und bei ihrer Bewegung nach unten in ihrer anderen Endstellung gegen einen anderen Festanschlag 15. Die Spindelmutter 13 ist in einer dreiseitigen Nut 16 geführt.

In dieser Figur 1 ist die Kugel in der Geschlossen-Stellung der Armatur dargestellt, in der die Durchgangsöffnung 2 sich senkrecht zur Durchflußrichtung erstreckt. In dieser Endstellung ist das untere Ende des Bedienhebels gegenüber der Senkrechten nach rechts ausgelenkt, so daß der Bedienhebel sich nicht in einem toten Winkel befinden kann.

In der Offen-Stellung, die durch gestrichelte Linien dargestellt ist, befindet sich die Spindelmutter 13 in ihrer oberen Endstellung, an dem oberen Festanschlag 15 anliegend. Auch in dieser Stellung ist das untere Ende des Bedienhebels 7 gegenüber der Senkrechten nach rechts ausgelenkt, so daß er sich auch in dieser Endstellung niemals in einem toten Winkel befinden kann.

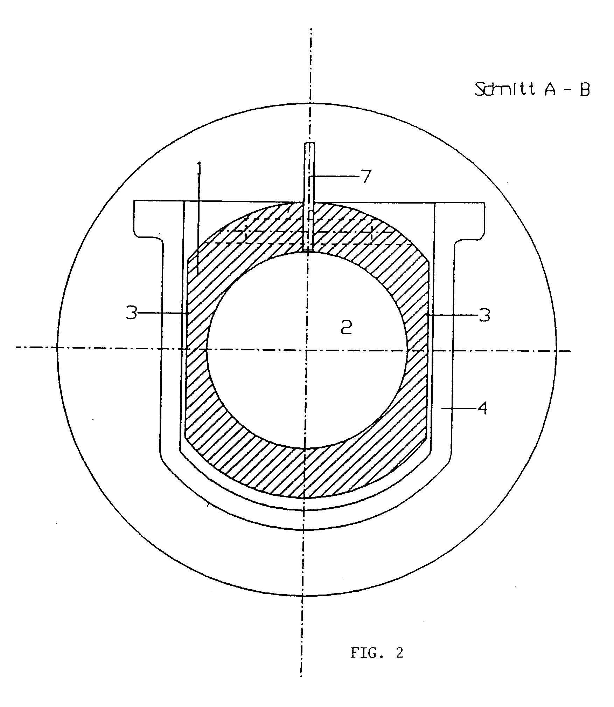

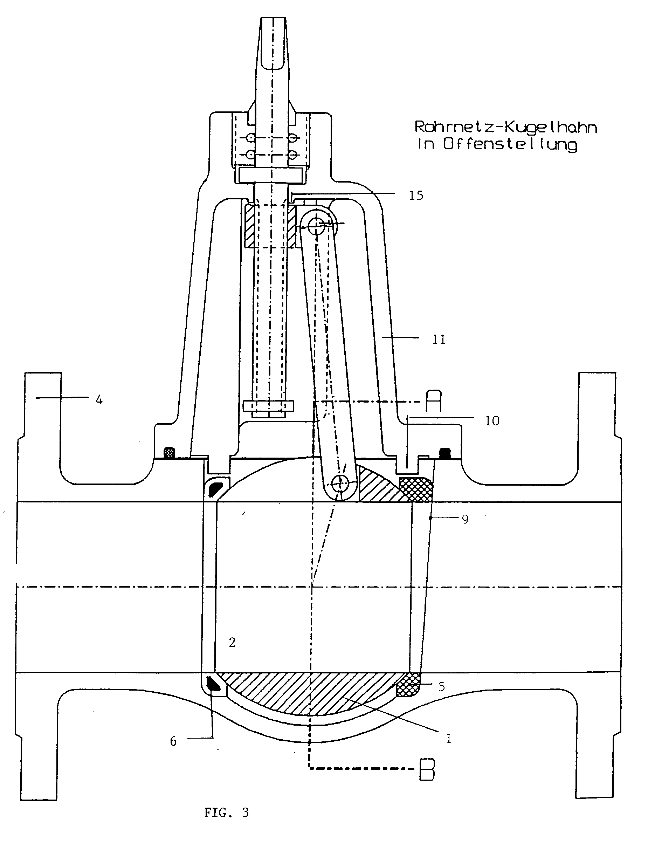

In Figur 2, die einen Schnitt längs der Linie A-B der Figur 3 zeigt, sieht man besonders deutlich die seitlichen Abflachungen 3 der Kugel 1. Diese seitlichen Abflachungen 3 entsprechen seitlichen Wänden 4 des Gehäuses. Durch diese Ausbildung wird die Kugel bei ihrer Bewegung so geführt, daß sie nur um die in Figur 2 gezeichnete horizontale Achse verschwenkbar ist. Dreh- oder Schwenkbewegungen um die vertikale Achse der Figur 2 sind somit ausgeschlossen.

Ferner sieht man in dieser Figur 2 den Bedienhebel 7, der teilweise in einem Ausschnitt der Absperrkugel angeordnet und mit seinem unteren Ende schwenkbar an dieser befestigt ist.

Figur 3 zeigt die Armatur in Offen-Stellung, in der die Durchlaßöffnung 2 sich in horizontaler Anordnung befindet und dadurch die gesamte Querschnittsfläche der beidseitigen Rohrabschnitte freigibt. In dieser Figur sieht man deutlich, daß das untere Ende des Bedienhebels gegenüber der Senkrechten nach rechts versetzt ist, so daß auch in dieser Endstellung, in der die Spindelmutter 13 gegen den oberen Festanschlag 15 anliegt, kein toter Winkel entsteht.

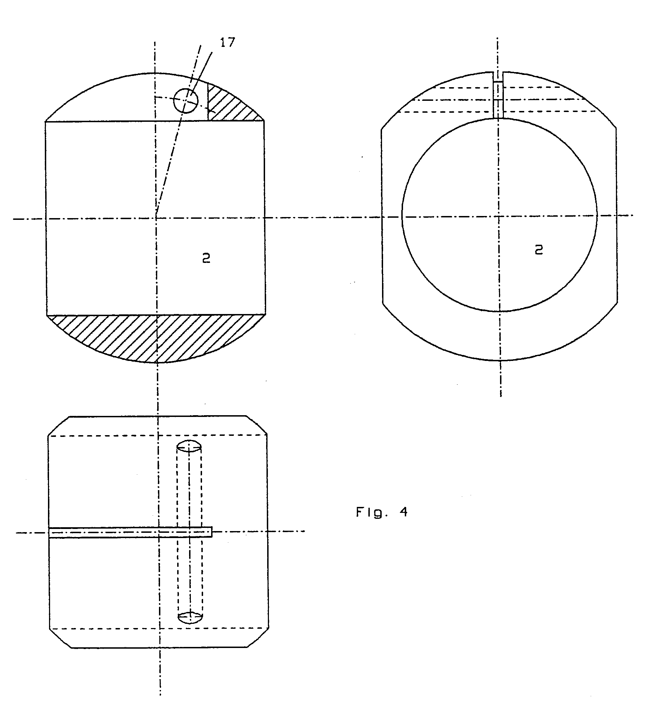

Figur 4 zeigt den Absperrkörper 1 in allen drei Ansichten. Die Vorderansicht ist ein Schnitt durch die Mitte des Absperrkörpers in Offen-Stellung, wobei sich die Durchlaßöffnungen 2 in horizontaler Anordnung befinden. Ferner ist die Aufnahmebohrung 17 für die gelenkige Lagerung des Bedienhebels 7 zu erkennen. In der Rückansicht, oben rechts in Figur 4, sieht man die Ausnehmung für diesen Hebel 7. Ferner sind die Seitenansciht und die Draufsicht uaf den Absperrkörper 1 dargestellt.

## Patentansprüche

1. Kugelhahn, insbesondere für Wasserversorgungs-Druckleitungen, mit einer Kugel mit Durchgangsbohrung (2) als Absperrkörper (1),
dadurch gekennzeichnet, daß der Absperrkörper (1) beidseitig parallel zur Achse der Durchgangsbohrung (2) in Form einer Kugelzone abgeflacht ist und über diese Abflachungen (3) im Gehäuse (4) gegen seitliches Verdrehen geführt ist, und daß der Absperrkörper (1) in Achse des Gehäuses (4) schwimmend zwischen einerseits einem keilförmigen Führungsring (5) und andererseits einem armierten Dichtring (6) gelagert ist und ein Bedienhebel (7) in einem Ausschnitt der führungsringseitigen Kugelkalotte (8) gelenkartig befestigt ist.

2. Kugelhahn nach Anspruch 1, dadurch gekennzeichnet, daß der Führungsring (5) an einer keilförmig angeschrägten Fläche (9) des Gehäuses (4) gelagert ist und durch diese keilförmig angeschrägten Fläche (9) beim gemeinsamen Einbringen von Sitzring (6), Absperrkörper (1) und Führungsring (5) in das Gehäuse (4) eine zum dichten Abschluß erforderliche Dichtpressung auf den elastischen Sitzring (6) aufgebracht ist, und daß der Führungsring (5) und Sitzring (6) in dieser Lage z.B. durch Haltenocken (10) einer Haube (11) fixiert sind und damit auch die Lage des Absperrkörpers (1) bestimmt ist.

3. Kugelhahn nach Anspruch 1 oder 2, dadurch gekennzeichnet, daß der Absperrkörper (1) durch den Bedienhebel (7) eine Schwenkbewegung von 90° ausführen kann, wenn das Gegenlager (12) des Bedienhebels (7) z.B. durch eine Spindelmutter (13) auf einer Gewindespindel (14) senkrecht bewegt wird.

4. Kugelhahn nach einem der Ansprüche 1 bis 3, dadurch gekennzeichnet, daß die gelenkartige Lagerung in der Kugelkalotte (8) in Offenstellung des Absperrkörpers (1) um mehr als 10° gegenüber der senkrechten Achse des Gehäuses (4) ausgelenkt ist.

5. Kugelhahn nach einem der vorhergehenden Ansprüche, dadurch gekennzeichnet, daß die Spindelmutter (13) auf der Gewindespindel (14) in ihrer oberen und unteren Endlage gegen Festanschläge (15) anläuft.

6. Kugelhahn nach einem der vorhergehenden Ansprüche, dadurch gekennzeichnet, daß die Spindelmutter (13) und der Bolzen des Gegenlagers (12) in einer dreiseitigen Führungsnut (16) in der Haube (11) gegen Auslenken geführt wird.

7. Kugelhahn nach einem der vorhergehenden Ansprüche, dadurch gekennzeichnet, daß der Absperrkörper (1) aus Metall besteht.

8. Kugelhahn nach einem der Ansprüche 1 bis 6, dadurch gekennzeichnet, daß der Absperrkörper (1) aus Kunststoff besteht.

## Claims

1. Ball Valve, especially for water delivery pipes, equipped with a ball plug with bore (2) as obturator (1),
characterized in that the isolating element (1) is flattened on both sides parallel to the axis of the bore (2), in the shape of a spherical segment and is guided in the body by means of these flattenings (3) preventing lateral torsion, and in that the obturator (1) is float-mounted centrallly to the axis of the body (4) betweeen a wedge-shaped guide ring (5) on the one hand and a reinforced sealing ring (6) on the other hand and in that an operating lever (7) is hinged in a slot of the spherical cap on the side of the guide ring.

2. Ball Valve to claim 1, characterised in that the guide ring (5) is supported on a surface (9) of the body (4), chamfered in the shape of a wedge, and in that by means of this surface chamfered in the shape of a wedge (9), when seat ring (6), obturator (1) and guide ring (5) are jointly inserted into the body, a sealing compression for tight closure is applied to the resilient seat ring (6), and in that the guide ring (5) and the seat ring (6) are fastened in this position for example by means of retaining cams (10) of a bonnet (11), thus localizing the obturator, too.

3. Ball Valve to claim 1 or 2, characterised in that the obturator (1) operated by the operating lever (7) can swivel by 90° when the bearing (12) of the operating lever (7) is moved vertically on a threaded stem (14), e.g. by a stem nut (13).

4. Ball Valve according to one of the claims 1 to 3, characterised in that in the open position of the obturator (1), the hinged bearing in the spherical cap (8) is displaced from the vertical axis of the body (4) by more than 10°.

5. Ball Valve according to any one of the preceding claims, characterised in that the stem nut (13) - in its upper and lower limit position - moves against fixed stops (15) on the threaded stem (14).

6. Ball Valve according to any one of the preceding claims, characterised in that the stem nut (13) and the bolt of the bearing (12) are guided in a threesided guide groove (16) in the bonnet (11) in order to prevent excursion.

7. Ball Valve according to any one of the preceding claims, characterised in that the obturator (1) is made of metal.

8. Ball Valve according to one of the claims 1 to 6, characterised in that the obturator (1) is made of plastic material.

## Revendications

1. Vanne sphérique, conduites de refoulement d'approvisionnement en eau, avec un boisseau sphérique avec passage (2), en tant qu'obturateur (1)
caractérisée en ce que l'obturateur (1) est aplati des deux côtés, parallèlement à l'axe du passage (2), sous forme d'un segment sphérique et est guidé dans le corps (4) moyennant ces aplatissements (3) pour éviter la torsion latérale, et en ce que l'obturateur (1) est logé d'une manière flottante dans l'axe du corps (4) entre l'anneau de guidage renforcé sous forme de coin (5) d'un côté et un anneau de joint renforcé (6) de l'autre côté, et en ce qu'un levier de manoeuvre (7) est articulé dans une rainure de la calotte (8) du côté de l'anneau de guidage.

2. Vanne sphérique selon revendication 1
caractérisée en ce que l'anneau de guidage (5) est logé sur une surface du corps (4) chanfreinée sous forme de coin (7) et en ce qu'en introduisant conjointement l'anneau de siège (6), l'obturateur (1) et l'anneau de guidage (5), une pression nécessaire à la fermeture étanche agit sur l'anneau de siège élastique, et en ce que l'anneau de guidage (5) et l'anneau de siège (6) sont fixés dans cette position par ex. à l'aide de cames de retenue (10) d'un chapeau (11) déterminant ainsi également la position de l'obturateur (1).

3. Vanne sphérique selon revendication 1 ou 2,
caractérisée en ce que l'obturateur (1) actionné par le levier de manoeuvre (7) peut pivoter par 90° si le palier (12) du levier de manoeuvre (7) est déplacé verticalement sur la tige filetée (14), par ex. á l'aide d'un écrou de tige (13).

4. Vanne sphérique selon une des revendications 1 à 3,
caractérisée en ce qu'en position ouverte de l'obturateur (1), le palier articulé dans la calotte sphérique (8) est déplacé de plus de 10° par rapport à l'axe vertical du corps (4).

5. Vanne sphérique selon une des revendications précédentes,
caractérisée en ce que l'écrou de tige (13) vient buter contre des arrêts fixes dans ses positions finales supérieure et inférieure sur la tige filetée (14).

6. Vanne sphérique selon une des revendications précédentes,
caractérisée en ce que l'écrou de tige (13) et le boulon du palier (12) sont guidés dans une rainure de guidage trilatérale (16) dans le chapeau (11) pour éviter une déviation.

7. Vanne sphérique selon une des revendications précédentes,
caractérisée en ce que l'obturateur (1) est en métal.

8. Vanne sphérique selon une des revendications 1 à 6,
caractérisée en ce que l'obturateur (1) est en matière synthétique.
